# EUROPÄISCHE PATENTSCHRIFT

(11) **EP 1 605 766 B1**
(45) Veröffentlichungstag und Bekanntmachung des Hinweises auf die Patenterteilung: **17.10.2007**
(21) Anmeldenummer: 04722270.8
(22) Anmeldetag: 22.03.2004
(51) Int. Cl.: A22C 13/00

(54) **WURSTPRODUKT UND ENTSPRECHENDE WURSTHÜLLE**
SAUSAGE PRODUCT AND CORRESPONDING SAUSAGE CASING
SAUCISSE ET ENVELOPPE POUR SAUCISSE CORRESPONDANTE

(30) Priorität: 22.03.2003 DE 10312890; 17.12.2003 DE 10359111
(43) Veröffentlichungstag der Anmeldung: 21.12.2005
(73) Patentinhaber: Kalle GmbH, 65203 Wiesbaden (DE)
(72) Erfinder: AUF DER HEIDE, Christian, 49080 Osnabrück (DE); AUF DER HEIDE, Dirk, 45954 Alfhausen (DE); GAUGER, Olaf, 55299 Nackenheim (DE)
(74) Vertreter: Engelmann, Kristiana
(86) Internationale Anmeldenummer: PCT/EP2004/003008
(87) Internationale Veröffentlichungsnummer: WO 2004/082388

(56) Entgegenhaltungen:
- EP-A- 0 432 942
- WO-A-92/10411
- DE-A- 2 655 253
- DE-A- 3 127 444
- US-A- 3 528 601
- US-A- 5 490 541

## Beschreibung

Die Erfindung betrifft ein Wurstprodukt mit den Merkmalen des Oberbegriffs des Anspruchs 1 sowie ein Wurstprodukt mit den Merkmalen des Oberbegriffs des Anspruchs 20 und eine Wursthülle zur Herstellung der vorgenannten Wurstprodukte. Als Wurstprodukt im Sinne der Erfindung ist unabhängig von eventuellen lebensmittelrechtlichen Kennzeichnungen nicht ausschließlich ein fleischhaltiges Produkt zu verstehen, sondern alle in entsprechender Wurstform hergestellten Produkte.

Bei herkömmlichen Wurstprodukten ist der Wurstinhalt in einer Wursthülle eingefüllt, und die Wursthülle, die sowohl ein Naturdarm als auch eine künstliche Nahrungsmittelhülle sein kann, ist endseitig verschlossen, meist mit jeweils einem Clip oder durch Abbindung oder dergleichen. Zum Öffnen des Wurstproduktes bzw. der Wurst muß ein Hilfsmittel, meist ein Messer oder eine Schere verwendet werden, mit dem die Wursthülle aufgetrennt oder unmittelbar ein Wurstende abgeschnitten wird. Da die eingesetzten Wursthüllen möglichst nicht unbeabsichtigt beschädigbar sein sollen, sind sie sehr stabil ausgeführt. Insbesondere künstliche Wursthüllen werden in der Verarbeitung zur Herstellung von Wurstprodukten hohen mechanischen Anforderungen unterzogen und sollen den maximalen Schutz des Wurstinhalts gewährleisten. Sie sind daher mechanisch und physikalisch mit hohen Festigkeiten ausgelegt, so daß sehr scharfe und spitze Messer zum Auftrennen und Öffnen der Wursthülle verwendet werden müssen, wofür das überwiegend vorhandene klassische Eßbesteck nicht ausreicht. Hieraus resultiert eine Verletzungsgefahr insbesondere aber nicht nur für Kinder und ältere Verbraucher. Außerdem können Würste beispielsweise unterwegs nicht verzehrt werden, wenn kein geeignetes Öffnungshilfsmittel zur Hand ist.

Die WO92/10411 beschreibt ein weiterentwickeltes Wurstprodukt mit einer Wursthülle, auf der über eine Klebeverbindung ein Band fixiert ist. Die Klebeverbindung ist dabei derart stakt ausgebildet, daß bei einem Entfernen des Bandes die Wursthülle im Bereich der Verbindungsstelle zum Band aufreißt. Das Öffnen der Wursthülle in dieser Weise ist jedoch mit einer deutlichen Kraftanstrengung verbunden.

Der Erfindung liegt die Aufgabe zugrunde, eine Wurst bzw. eine entsprechende Wursthülle zu schaffen, die auf einfache Weise ohne zusätzliche Öffnungshilfsmittel geöffnet werden kann.

Diese Aufgabe wird erfindungsgemäß durch ein Wurstprodukt mit den Merkmalen des Anspruchs 1 sowie durch ein Wurstprodukt mit den Merkmalen des Anspruchs 20 und eine entsprechende Wursthülle gelöst.

Durch die alternativ zueinander erfindungsgemäß vorgesehenen Ausgestaltungen der Wurstprodukte ist eine einfache, wenig kraftanstrengende Öffnung der Wursthülle mit Hilfe der Öffnungselemente möglich. Im Falle der Ausbildung des Öffnungselementes mit einem zusätzlichen Schädigungswerkzeug reißt die Wursthülle bedingt eben durch das Schädigungswerkzeug bereits bei geringerer Kraftanstrengung ein, und die Wursthülle kann geöffnet werden. In der hierzu alternativen Ausgestaltung des Öffnungselementes mit einem freien Griffbereich und einem fest mit der Wursthülle verbundenen Reißbereich, wobei der Griffbereich starr mit dem Reißbereich verbunden ist, beinhaltet das Öffnungselement eine Hebelfunktion. Hierdurch ist eine im Vergleich zum Stand der Technik deutlich einfachere Öffnung des Wurstprodukts ohne zusätzliche Hilfsmittel möglich, Der freie Griffbereich dient dabei der leichten Handhabung und der Reißbereich nimmt beim Öffnen der Wursthülle einen Teil der Wursthülle mit.

Auch bezüglich herkömmlicher Wursthüllen ohne Öffnungselement weist die Erfindung Vorteile auf. Indem die Wursthülle selbst mit einem Öffnungselement versehen ist, dessen Betätigung die gezielte Öffnung der Wursthülle im Bereich des Öffnungselementes ermöglicht, kann auf weitere Öffnungshilfsmittel, insbesondere Messer, verzichtet werden. Dabei muß die Wursthülle mit dem Öffnungselement wegen des meist schnell verderblichen Wurstinhalts vor dem Öffnen vollständig geschlossen sein. Klassische sogenannte Aufreißfäden, wie beispielsweise an Kaugummipäck chen, sind insoweit nicht einsetzbar, da im Bereich des Fadenanfangs die Verpackung bereits eine wenn auch geringfügige Öffnung aufweist.

Besonders vorteilhaft lassen sich für die Wursthülle Materialien verwenden, die eine gute Weiterreißfähigkeit in Quer- und Längsrichtung aufweisen, sogenannte isotrope Materialien. Hierbei kann mit dem Öffnungselement beim Öffnen die Wursthülle streifenförmig abgeringelt werden, so daß stets so viel vom Wurstinhalt freigelegt wird, wie verzehrt werden soll.

Zur Vereinfachung des Öffnens, um nicht direkt den ganzen Wurstinhalt freizulegen, ist das Öffnungselement vorzugsweise derart auf der Wursthülle angeordnet, daß hen, unabhängig davon, ob diese gerade oder gebogen nach Art eines Naturdarms geformt ist.

Sinnvollerweise ist das Öffnungselement nahe des Wurstendes vorzusehen, damit beim Öffnen neben dem unmittelbar zu verzehrenden Endstück nicht mehrere angebrochene Teilstücke der Wurst entstehen. Damit das Öffnungselement nicht versehentlich ganz abgerissen werden kann sollte es mit der Wursthülle fest verbunden sein. Dies kann insbesondere durch Kleben oder Schweißen aber auch durch andere Fügetechniken erfolgen.

Weitere Vorteile und Einzelheiten ergeben sich aus den Unteransprüchen und in den Zeichnungen dargestellten Ausführungsbeispielen, die im folgenden erläutert werden; es zeigen:
- Fig. 1: die Öffnung eines herkömmlichen Wurstproduktes,
- Fig. 2: ein nicht erfindungsgemäßes Wurstprodukt mit Öffnungselement,
- Fig. 3: den Gegenstand aus Fig. 2 ohne das Öffnungselement,
- Fig. 4: den Gegenstand aus Fig. 2 beim Öffnen,
- Fig. 5: die Unterseite des Öffnungselements aus Fig. 2,
- Fig. 6: ein nicht erfindungsgemäßes Öffnungselement in anderer Ausführungsform,
- Fig. 7: ein erfindungsgemäßes Öffnungselement,
- Fig. 8: einen Schnitt durch das Öffnungselement der Fig. 7 in Richtung VIII-VIII,

- Fig. 9: eine Wurst im Schnitt mit anderem Öffnungselement,
- Fig. 10: eine Draufsicht auf das Öffnungselement der Fig. 9 in Richtung X,
- Fig. 11: den Gegenstand aus Fig. 9 beim Öffnen,
- Fig. 12: eine andere Ausführungsform des Gegenstands aus Fig. 9,
- Fig. 13: eine Draufsicht auf das Öffnungselement der Fig. 12 in Richtung XIII,
- Fig. 14: den Gegenstand aus Fig. 12 beim Öffnen,
- Fig. 15: ein erfindungsgemäßes Wurstprodukt mit einem weiteren Öffnungselement und
- Fig. 16: einen Schnitt durch das Öffnungselement der Fig. 15 in Richtung XVI-XVI.

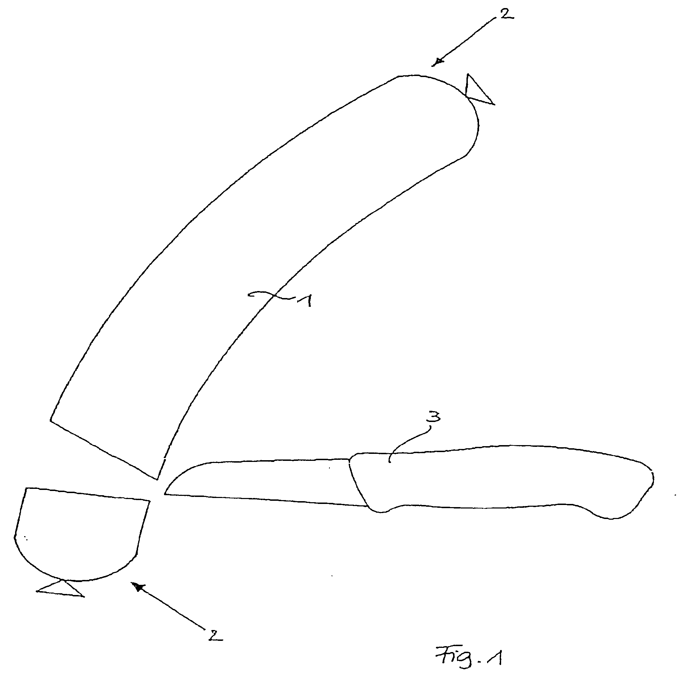

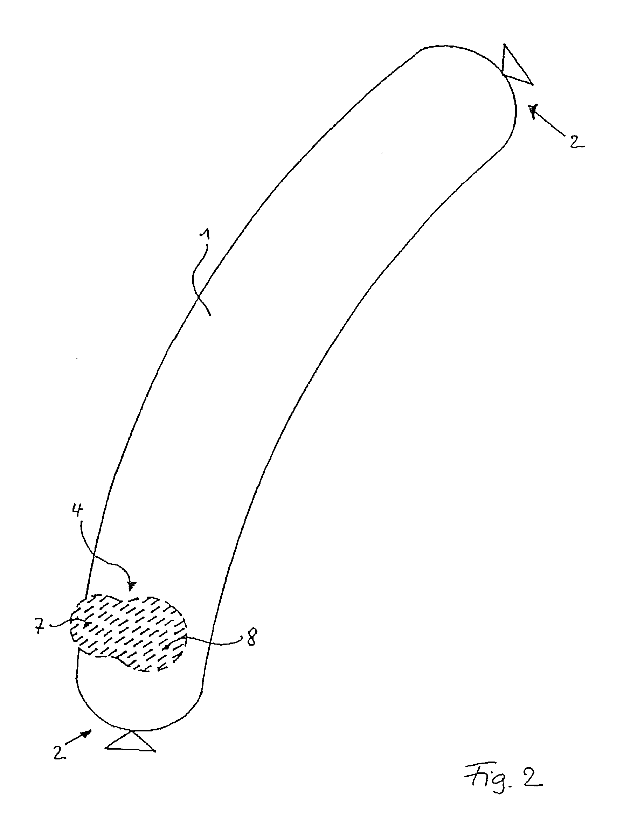

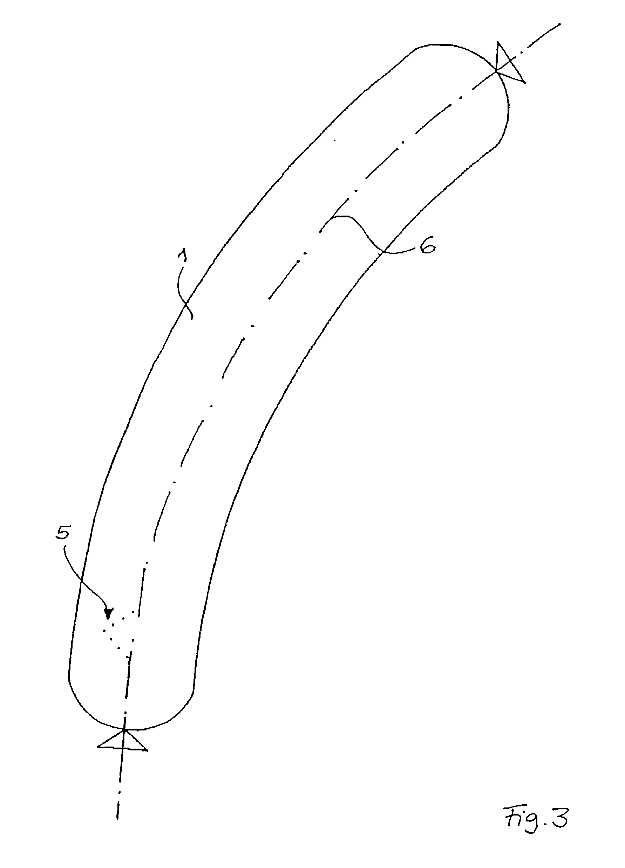

Bei der in Fig. 1 dargestellten Wurst handelt es sich um ein herkömmliches Wurstprodukt mit einer Wursthülle 1, in die Wurstinhalt eingefüllt ist. Die Wursthülle 1 ist meist ursprünglich ein Schlauch, der an beiden Enden 2 mit nicht dargestellten Clips verschlossen wird. Zum Öffnen einer herkömmlichen Wurst wird meist wie in Fig. 1 gezeigt ein Messer 3 eingesetzt, mit dem ein Wurstende abgeschnitten wird.

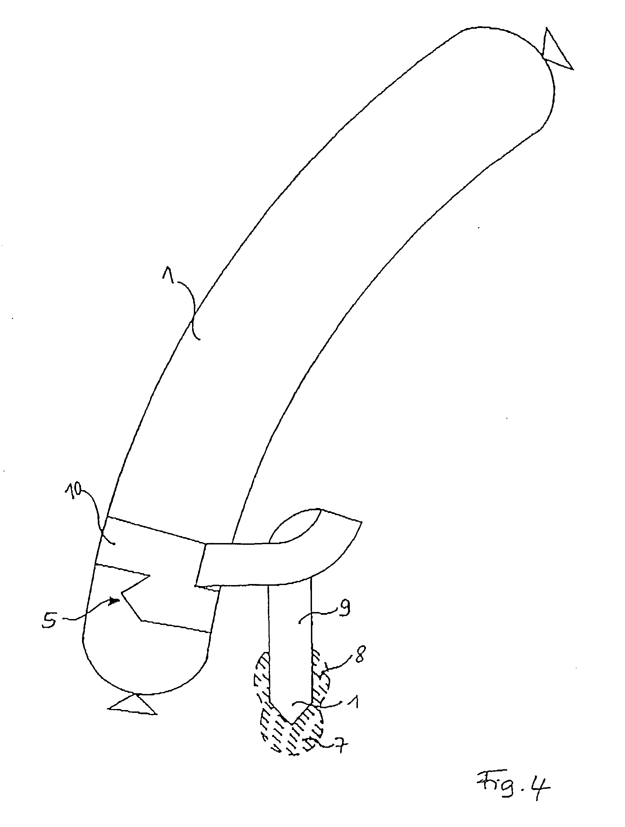

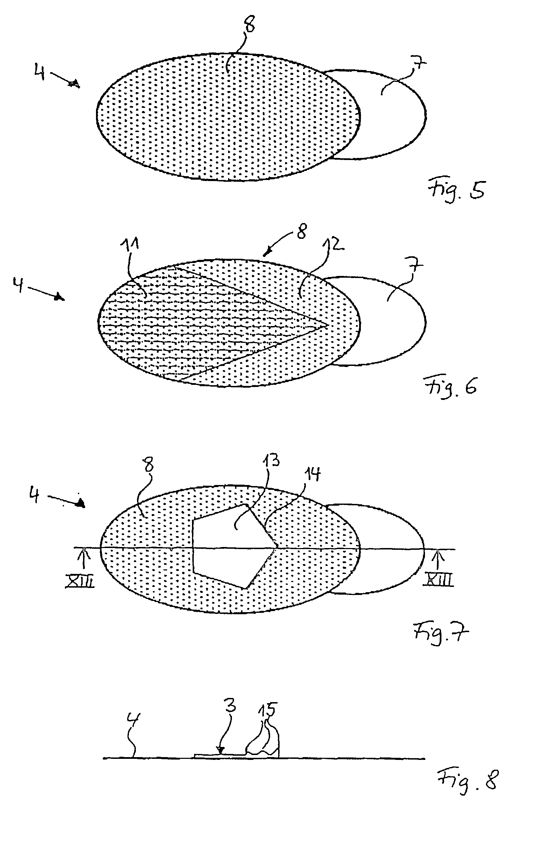

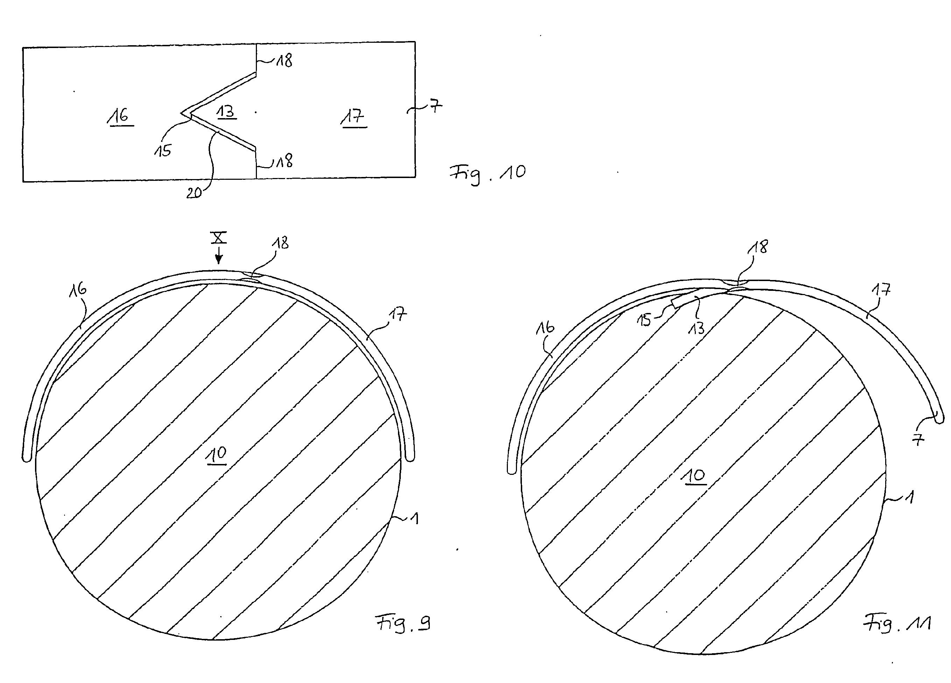

Fig. 2 zeigt eine nicht erfindungsgemäße Wurst, deren Wursthülle 1 ein möglichst nahe eines Wurstendes 2 angeordnetes Öffnungselement 4 aufweist. Das Öffnungselement ist nach Art einer Aufreißlasche ausgebildet und mit der Wursthülle 1 insbesondere durch eine Verklebung, möglicherweise aber auch z. B. durch Verschweißen, verbunden. Bei einer besonderen in Fig. 3 dargestellten Ausführungsform ist die Wursthülle 1 im Bereich des in Fig. 3 nicht dargestellten Öffnungselements an der mit 5 bezeichneten Position vorgeschädigt. Diese Vorschädigung 5 ist wie dargestellt vorzugsweise pfeilspitzenförmig ausgebildet, wobei die Pfeilspitze quer zur Längsachse 6 der Wurst gerichtet ist, damit ein Aufreißen der Wursthülle 1 beim Öffnen ebenfalls in Querrichtung zur Längsachse 6 erfolgt. Die Vorschädigung 5 kann eine Schwächung z. B. Wandstärkenverminderung der Wursthülle 1 sein oder auch eine vollständige Perforierung der Wursthülle 1, daß heißt Durchtrennung auf punktförmige Weise oder Schnitt. Insbesondere bei einer Vorschädigung 5 mit Durchtrennung der Wursthülle 1 ist dafür Sorge zu tragen, daß der Wurstinhalt nicht verdirbt. Dazu kann das Öffnungselement 4 so über der Vorschädigung angebracht, insbesondere aufgeklebt werden, daß es die Vorschädigung 5 vollständig bedeckt und verschließt.

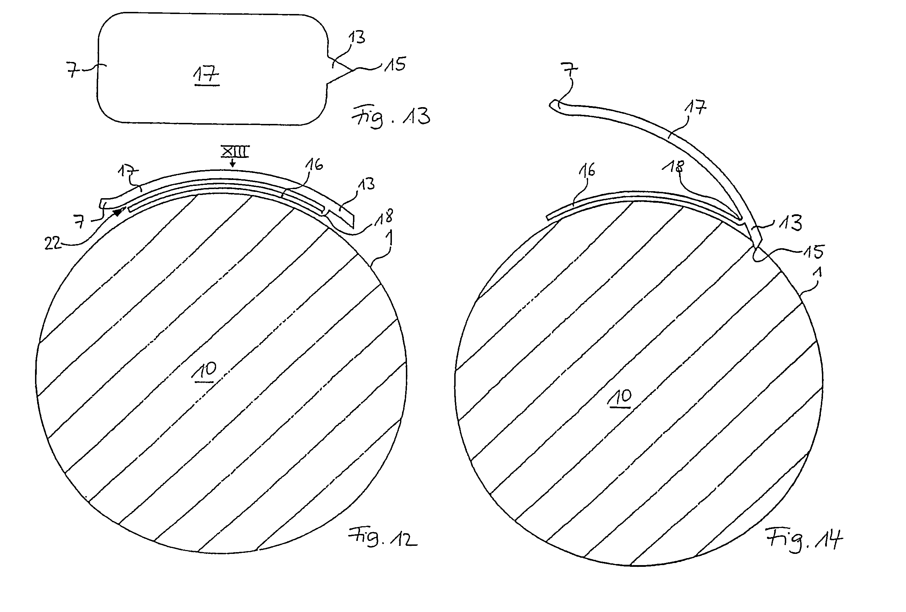

Fig. 4 zeigt den Öffnungsvorgang der in den Fig. 2 und 3 dargestellten Wurst, wobei an einem Griffbereich 7 des Öffnungselements 4 gezogen wurde. Dabei reißt ein fest mit der Wursthülle 1 verbundener Reißbereich 8 die Wursthülle 1 an der Vorschädigung 5 auf. Über das Öffnungselement 4 kann dann ein in der Breite im wesentlichen der Vorschädigung 5 entsprechender Streifen 9 der Wursthülle 1 abgerissen und von der Wurst abgeringelt werden, wodurch so viel Wurstinhalt 10 wie gewünscht freigelegt wird.

Fig. 5 zeigt als Detail das Öffnungselement 4 aus den Fig. 2 und 4 von seiner der Wursthülle zugewandten Unterseite aus. Dabei ist der Reißbereich 8 mit Klebstoff beschichtet und der Griffbereich 7 frei und nicht direkt mit der Wursthülle verbunden, so daß das Öffnungselement 4 an diesem angehoben werden kann. Der Griffbereich 7 kann auch mit einer leicht zu lösenden Haftung gegenüber der Wursthülle 1 versehen sein.

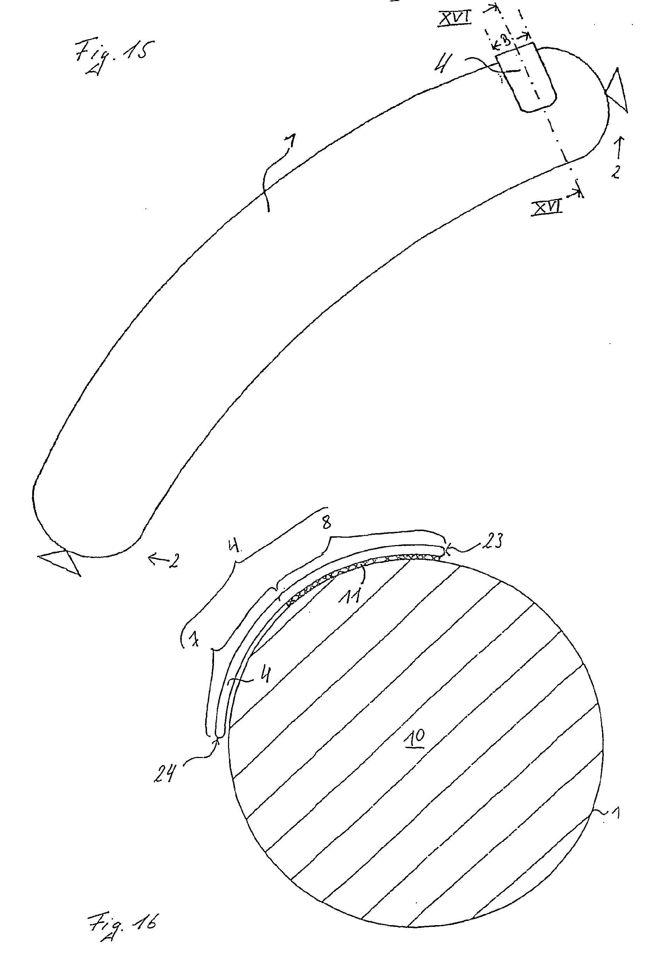

Die Fig. 6 bis 14 zeigen andere Ausführungsformen des Öffnungselementes 4. Diese Ausführungsformen können auch ohne eine Vorschädigung der Wursthülle 1 eingesetzt werden.

Das Öffnungselement 4 aus Fig. 6 ist so ausgestaltet, daß eine Verbindung mit der Wursthülle in einer Form erfolgt, die eine gezielte Schädigung der Wursthülle begünstigt. Dazu ist im Reißbereich 8 ein auf den Griffbereich 7 hin spitz zulaufender Bereich stark haftenden Klebstoff 11 aufgebracht. Dessen Haftkraft an der Wursthülle ist so stark, daß er die Reißfestigkeit der Wursthülle übersteigt. Bevorzugt kann der übrige Reißbereich 8 wie in Fig. 6 dargestellt mit einem Klebstoff geringerer Haftkraft 12 versehen sein, der das Öffnungselement 4 insgesamt auf der Wursthülle fixiert.

In einer in den Fig. 7 bis 14 dargestellten Ausführungsform der Erfindung besitzt das Öffnungselement 4 ein Schädigungswerkzeug 13. Dieses ist bei der Ausführungsform der Fig. 7 und 8 wie dargestellt an seinen dem Griffbereich 7 zugewandten Kanten scharfkantig, insbesondere mit einzelnen Spitzen 15 ausgebildet, die die Wursthülle durchdringen können. Vorzugsweise ist das Schädigungswerkzeug 13 an der der Wursthülle zugewandten Unterseite des Öffnungselementes 4 angebracht. Es kann jedoch auch an dessen Oberseite vorgesehen werden, wobei dann die Kanten oder Spitzen so scharf ausgebildet sein müssen, daß sie auch das Öffnungselement 4 selbst durchdringen können. Besonders einfach und preisgünstig ist das Schädigungswerkzeug 13 aus einem insbesondere spritzgegossenen oder gestanzten Kunststoffstück oder z.B. einem Blechstück mit in Richtung auf die Wursthülle abgewinkelter Kante herzustellen.

Im Fertigungsprozeß kann das Öffnungselement 4 aus Fig. 7 auf die mit Wurstinhalt 10 gefüllte Wursthülle 1 so aufgebracht werden, daß die entstehende Schädigung der Wursthülle 1 durch Aufdrücken des Schädigungswerkzeugs 13 des Öffnungselements 4 sofort wieder hygienisch über den übrigen Reißbereich 8 verschlossen wird, ohne daß eine hygienische Beeinträchtigung entsteht. Es ist jedoch auch möglich, das Öffnungselement 4 ohne Druck auf das Schädigungswerkzeug 13 so mit der Wursthülle 1 zu verbinden, daß die Wursthülle zunächst unversehrt bleibt. In diesem Fall ist erst beim Öffnen der Wurst durch Druck auf einen vorzugsweise entsprechend gekennzeichneten Bereich des Öffnungselementes 4, in dem das Schädigungswerkzeug 13 angeordnet ist, die Wursthülle 1 gezielt zu verletzen und dann mit dem Öffnungselement 4 aufzureißen.

Die Fig. 9 bis 14 zeigen weitere Produkte mit Öffnungselementen 4 mit Schädigungswerkzeug 13, in denen das Öffnunsgelement 4 zumindest teilweise als biegefester Hebel ausgebildet ist. In den Fig. 9 bis 11 umgreift das Öffnungselement 4 die Wurst wie ein Teilring. Dabei ist ein Bereich 16 mit der Wursthülle 1 fest verbunden. An diesen Bereich 16 ist ein beweglicher Bereich 17 vorzugsweise schwenkbeweglich angebunden. Durch Abheben des beweglichen Bereichs 17 an seinem als Griffbereich 7 ausgebildeten Ende drückt sich das dornförmige Schädigungswerkzeug 13 wie in Fig. 11 abgebildet in die Wursthülle 1, wodurch diese geöffnet wird.

Die Fig. 12 bis 14 zeigen eine andere Ausführungsvariante, jedoch mit ähnlicher Funktion wie die der Fig. 9 bis 11. In beiden Fällen ist das Öffnungselement vorzugsweise einstückig, insbesondere als Kunststoffteil ausgebildet. Dabei kann die Bewegbarkeit bzw. Scharnierbarkeit des beweglichen Bereichs 17 vorzugsweise durch ein Filmscharnier 18 erreicht werden.

Der bewegliche Bereich 17 kann bei beiden Ausführungsformen gegen eine unbeabsichtigte Betätigung gesichert sein. Dies ist beispielsweise dadurch zu verwirklichen, daß der Griffbereich 7 des beweglichen Bereichs 17 mit einem leicht haftenden Kleber an der Wursthülle 1 oder gegenüber dem übrigen Teil des Öffnungselements 4 fixiert ist. Auch kann das Öffnungselement 4 mit einer Art Siegel versehen sein, das gleichzeitig einer Fixierung dient und zeigt, daß das Öffnungselement 4 noch nicht betätigt wurde. Ein derartiges Siegel könnte insbesondere bei einem Kunststoffelement beispielsweise durch dünne Stege, die bei Betätigung gebrochen werden, gebildet sein. Diese Stege könnten bei der Ausführungsform der Fig. 10 in dem mit 20 bezeichneten Spalt zwischen Schädigungswerkzeug 13 und dem festen Bereich 16 des Öffnungselements 4 vorgesehen werden. Bei dem Öffnungswerkzeug der Fig. 12 wäre die als Sollbruchstelle ausgelegte Verbindung bzw. das Siegel bevorzugt am hinteren Ende 22 zwischen festem 16 und beweglichem Bereich 17 vorzusehen.

Die Fig. 15 und 16 zeigen eine weitere Ausführungsform des Öffnungselementes 4. Dieses ist bevorzugt einstückig und weitestgehend biegefest ausgebildet. Der Griffbereich 7 ist starr mit dem Reißbereich 8 verbunden und bildet mit diesen zusammen einen Hebel. Hierbei hat der Reißbereich 8 neben der Funktion des Aufreißens der Wursthülle zusätzlich die Funktion eines Hebels. Der Reißbereich 8 ist im Gegensatz zum Griffbereich 7 mit der Wursthülle 1 über einen stark haftenden Klebstoff 11 verbunden. Durch die Hebelwirkung ist ein deutlich geringerer Krafteinsatz zum Öffnen der Wursthülle 1 mit Hilfe des Öffnungselementes 4 erforderlich.

Das dem Griffbereich 7 gegenüberliegende Ende 23 des Öffnungselements 4 ist abgerundet ausgebildet. Bei Betätigen des Öffnungselementes 4 dient dieser abgerundete Endbereich 23 als Anlagefläche an die Wursthülle 1. Aufgrund der Abrundung reißt die Wursthülle in diesem Bereich nicht ein, sondern zwischen dem Griffbereich 7 und dem Reißbereich 8. Auch bei diesem Ausführungsbeispiel ist eine Schwächung der Wursthülle 1 in diesem Bereich durch eine Vorschädigung, ein dünneres Material und dergleichen möglich, jedoch keineswegs erforderlich.

Wie in Fig. 16 dargestellt, weist das Öffnungselement 4 eine im wesentlichen an dem Wurstprodukt anliegende und der Form bzw. dem Kaliber des Wurstprodukts angepaßte Wölbung auf. Hierdurch wird ein versehentliches Betätigen des Öffnungselements 4, z.B. durch einen Hängenbleiben an Gegenständen der Umgebung, verhindert. Auch können so mehrere derartige Wurstprodukte enger gepackt werden.

Das Öffnungselement 4 ist bevorzugt im wesentlichen rechteckig mit abgerundeten Ecken ausgebildet. Je nach Form des Wurstproduktes und verwendetem Material für die Wursthülle 1 bzw. das Öffnungselement 4 kann auch eine trapezförmige oder dreieckige Ausgestaltung des Öffnungselements 4 jeweils mit ebenfalls abgerundeten Ecken sinnvoll sein, um eine gegenüber der Breite des vorderen Endbereichs 24 des Öffnungselements 4 größere Breite der hinteren als Anlagefläche dienenden Endbereichs 23 zur optimalen Kraftverteilung zu erhalten.

Um während des Betätigens des Öffnungselements 4 eine ausreichende Anlagekraft aufbringen zu können und ein Eindrücken des Reißbereichs 8 in das Wurstprodukt zu vermeiden, ist die Breite B des Öffnungselements 4 an dem dem Griffbereich 7 gegenüberliegenden Ende des Reißbereichs 8 mit Vorteil größer als 5 mm und bevorzugt 10 - 30 mm. Je weicher die Wurstmasse des Wurstproduktes ist, desto größer sollte die Anlagefläche bzw. die Breite B sein. Auch ist die Länge des Reißbereichs 8 mit Vorteil länger als 4 mm und beträgt bevorzugt 5 - 15 mm. Um eine ausreichende Hebelkraft zu erzielen, ist das Verhältnis der Länge des Reißbereichs 8 zum Griffbereich 7 vorzugsweise kleiner oder gleich 3 und bevorzugt 0,5 - 2.

Insgesamt zeichnet sich das erfindungsgemäße Wurstprodukt durch eine leichte und sichere Handhabbarkeit aus.

## Patentansprüche

1. Wurstprodukt mit in einer endseitig verschlossenen Wursthülle (1) aufgenommenem Wurstinhalt (10), wobei die Wursthülle (1) mit einem Öffnungselement (4) versehen ist, dessen Betätigung die gezielte Öffnung der Wursthülle (1) im Bereich des Öffnungselements (4) ermöglicht, **dadurch gekennzeichnet, daß** das Öffnungselement (4) ein Schädigungswerkzeug (13) umfaßt.

2. Wurstprodukt nach Anspruch 1, **dadurch gekennzeichnet, daß** die Wursthülle (1) aus einem in allen Richtungen reißbaren Material besteht.

3. Wurstprodukt nach einem der vorstehenden Ansprüche, **dadurch gekennzeichnet**e, daß das Öffnungselement (4) derart auf der Wursthülle (1) angeordnet ist, daß eine Betätigung die Öffnung der Wursthülle (1) im wesentlichen quer zu einer Wurstlängsachse (6) bewirkt.

4. Wurstprodukt nach einem der vorstehenden Ansprüche, **dadurch gekennzeichnet, daß** das Öffnungselement (4) nahe eines Wurstendes (2) angeordnet ist.

5. Wurstprodukt nach einem der vorstehenden Ansprüche, **dadurch gekennzeichnet, daß** das Öffnungselement (4) mit der Wursthülle (1) fest verbunden ist, insbesondere durch Kleben oder Schweißen.

6. Wurstprodukt nach einem der vorstehenden Ansprüche, **dadurch gekennzeichnet, daß** die Wursthülle (1) im Bereich des Öffnungselements (4) vorgeschädigt ist.

7. Wurstprodukt nach Anspruch 6, **dadurch gekennzeichnet, daß** die Vorschädigung (5) durch eine im wesentlichen pfeilspitzenförmigen Perforierung gebildet ist.

8. Wurstprodukt nach Anspruch 6 oder 7, **dadurch gekennzeichnet, daß** die Vorschädigung von dem Öffnungselement (4) verschlossen ist.

9. Wurstprodukt nach einem der vorstehenden Ansprüche, **dadurch gekennzeichnet, daß** das Öffnungselement (4) einen freien Griffbereich (7) und einen fest mit der Wursthülle (1) verbundenen Reißbereich (8) aufweist.

10. Wurstprodukt nach Anspruch 9, **dadurch gekennzeichnet, daß** die der Wursthülle (1) zugewandte Seite des Reißbereichs (8) des Öffnungselements (4) mit Klebstoff beschichtet ist.

11. Wurstprodukt nach Anspruch 9 oder 10, **dadurch gekennzeichnet, daß** die Verbindung des Reißbereichs (8) des Öffnungselements (4) mit der Wursthülle (1) eine gezielte Schädigung und Öffnung der Wursthülle (1) begünstigende Form aufweist.

12. Wurstprodukt nach einem der Ansprüche 9 bis 11, **dadurch gekennzeichnet, daß** die Verbindung des Reißbereichs (8) des Öffnungselements (4) mit der Wursthülle (1) auf den Griffbereich (7) hin spitz zulaufend ausgebildet ist.

13. Wurstprodukt nach einem der Ansprüche 9 bis 12, **dadurch gekennzeichnet, daß** die Verbindung des Reißbereichs (8) des Öffnungselements (4) mit der Wursthülle (1) stärker als der Einreißwiderstand der Wursthülle (1) ausgelegt ist.

14. Wurstprodukt nach Anspruch 13, **dadurch gekennzeichnet, daß** das Schädigungswerkzeug (13) auf der der Wusthülle (1) zugewandten Unterseite des Öffnungselements (4) angeordnet ist.

15. Wurstprodukt nach Anspruch 13 oder 14, **dadurch gekennzeichnet, daß** das Schädigungswerkzeug (13) zumindest teilweise scharfkantig und/oder spitz ausgebildet ist.

16. Wurstprodukt nach einem der Ansprüche 13 bis 15, **dadurch gekennzeichnet, daß** das Schädigungswerkzeug (13) aus einem Kunststoff- oder Blechteil mit zumindest einer in Richtung auf die Wursthülle (1) abgewinkelten Kante besteht.

17. Wurstprodukt nach einem der Ansprüche 13 bis 16, **dadurch gekennzeichnet, daß** das Öffnungselement (4) einen mit der Wursthülle (1) fest verbundenen Bereich (16) aufweist, mit dem ein das Schädigungswerkzeug (13) umfassender Bereich (17) zur Betätigung des Schädigungswerkzeugs (13) beweglich verbunden ist.

18. Wurstprodukt nach Anspruch 17, **dadurch gekennzeichnet, daß** der bewegliche Bereich (17) gegen unbeabsichtigte Betätigung gesichert ist.

19. Wurstprodukt nach einem der Ansprüche 17 oder 18, **dadurch gekennzeichnet, daß** der mit der Wursthülle (1) fest verbundene Bereich (16) des Öffnungselements (4) mit dem beweglichen Bereich (17) einstückig ausgebildet ist.

20. Wurstprodukt mit in einer endseitig verschlossenen Wursthülle (1) aufgenommenem Wurstinhalt (10), wobei die Wursthülle (1) mit einem Öffnungselement (4) versehen ist, dessen Betätigung die gezielte Öffnung der Wursthülle (1) im Bereich des Öffnungselements (4) ermöglicht und das Öffnungselement (4) einen freien Griffbereich (7) und einen fest mit der Wursthülle (1) verbundenen Reißbereich (8) aufweist, **dadurch gekennzeichnet, daß** der Griffbereich (7) starr mit dem Reißbereich (8) verbunden ist.

21. Wurstprodukt nach Anspruch 20, **dadurch gekennzeichnet, daß** das Öffnungselement (4) einstückig und weitestgehend biegefest ausgebildet ist.

22. Wurstprodukt nach Anspruch 20 oder 21, **dadurch gekennzeichnet, daß** das Öffnungselement (4) eine im wesentlichen an dem Wurstprodukt anliegende und der Form des Wurstprodukts angepaßte Wölbung aufweist.

23. Wurstprodukt nach einem der Ansprüche 20 bis 22, **dadurch gekennzeichnet, daß** das Öffnungselement (4) in den Bereichen, die mit der Wursthülle (1) insbesondere während des Betätigens des Öffnungselementes (4) in Berührung treten, stumpfkantig oder abgerundet ausgebildet ist.

24. Wurstprodukt nach einem der Ansprüche 20 bis 23, **dadurch gekennzeichnet, daß** das Öffnungselement (4) im wesentlichen rechteckig mit abgerundeten Ecken ausgebildet ist.

25. Wurstprodukt nach einem der Ansprüche 20 bis 24, **gekennzeichnet durch** die Merkmale eines der Ansprüche 1 bis 19.

26. Wursthülle (1) mit einem Öffnungselement nach einem der Ansprüche 1 bis 25, zur Herstellung eines Wurstprodukts.

## Claims

1. Sausage product with sausage contents (10) enclosed in a sausage casing (1) that is closed at the ends, wherein the sausage casing (1) is equipped with an opening element (4) which, when actuated, enables the targeted opening of the sausage casing (1) in the area of the opening element (4), **characterised in that** the opening element (4) comprises a damaging tool (13).

2. Sausage product according to claim 1, **characterised in that** the sausage casing (1) consists of a material that can be torn in all directions.

3. Sausage product according to one of the preceding claims, **characterised in that** the opening element (4) is arranged on the sausage casing (1) in such a way that actuation effects the opening of the sausage casing (1) essentially crosswise to a longitudinal axis of the sausage (6).

4. Sausage product according to one of the preceding claims, **characterised in that** the opening element (4) is arranged close to one end (2) of the sausage.

5. Sausage product according to one of the preceding claims, **characterised in that** the opening element (4) is firmly joined to the sausage casing (1), in particular by gluing or welding.

6. Sausage product according to one of the preceding claims, **characterised in that** the sausage casing (1) is pre-damaged in the area of the opening element (4).

7. Sausage product according to claim 6, **characterised in that** the prior damage (5) is formed by a perforation that is essentially shaped in the form of an arrow head.

8. Sausage product according to claim 6 or 7, **characterised in that** the prior damage is closed by the opening element (4).

9. Sausage product according to one of the preceding claims, **characterised in that** the opening element (4) has a free grip area (7), and a tearing area (8) that is firmly joined to the sausage casing (1).

10. Sausage product according to claim 9, **characterised in that that** side of the tearing area (8) of the opening element (4) facing the sausage casing (1) is coated with adhesive.

11. Sausage product according to claim 9 or 10, **characterised in that** the connection of the tearing area (8) of the opening element (4) to the sausage casing (1) has a shape that encourages the targeted damage to and opening of the sausage casing (1).

12. Sausage product according to one of the claims 9 to 11, **characterised in that** the connection of the tearing area (8) of the opening element (4) to the sausage casing (1) is designed to taper to a point towards the grip area (7).

13. Sausage product according to one of the claims 9 to 12, **characterised in that** the connection of the tearing area (8) of the opening element (4) to the sausage casing (1) is designed to be stronger than the initial tearing resistance of the sausage casing (1).

14. Sausage product according to claim 13, **characterised in that** the damaging tool (13) is arranged on that underside of the opening element (4) that faces the sausage casing (1).

15. Sausage product according to claim 13 or 14, **characterised in that** the damaging tool (13) is designed to be at least partly sharp-edged and/or pointed.

16. Sausage product according to one of the claims 13 to 15, **characterised in that** the damaging tool (13) comprises a plastic part or sheet metal part with at least one edge angled in the direction of the sausage casing (1).

17. Sausage product according to one of the claims 13 to 16, **characterised in that** the opening element (4) has a section (16) that is firmly joined to the sausage casing (1), to which a section (17) including the damaging tool (13) is movably connected, in order to actuate the damaging tool (13).

18. Sausage product according to claim 17, **characterised in that** the movable section (17) is secured against inadvertent operation.

19. Sausage product according to one of the claims 17 or 18, **characterised in that that** section (16) of the opening element (4) which is firmly connected to the sausage casing (1) is designed in one piece with the movable section (17).

20. Sausage product with sausage contents (10) contained in a sausage casing (1) that is closed at the ends, wherein the sausage casing (1) is equipped with an opening element (4) which, when actuated, enables the targeted opening of the sausage casing (1) in the area of the opening element (4), and the opening element (4) has a free grip area (7) and a tearing area (8) that is firmly connected to the sausage casing (1), **characterised in that** the grip area (7) is rigidly connected to the tearing area (8).

21. Sausage product according to claim 20, **characterised in that** the opening element (4) is designed in one piece, and as far as possible resistant to bending.

22. Sausage product according to claim 20 or 21, **characterised in that** the opening element (4) has a curvature that essentially rests against the sausage product and is adapted to the shape of the sausage product.

23. Sausage product according to one of the claims 20 to 22, **characterised in that** in those areas that come into contact with the sausage casing (1), in particular during actuation of the opening element (4), the opening element (4) is designed to have blunted corners or to be rounded.

24. Sausage product according to one of the claims 20 to 23, **characterised in that** the opening element (4) is designed to be essentially rectangular with rounded corners.

25. Sausage product according to one of the claims 20 to 24, **characterised by** the features of one of the claims 1 to 19.

26. Sausage casing (1) with an opening element according to one of the claims 1 to 25, for the production of a sausage product.

## Revendications

1. Saucisse comportant un contenu de saucisse (10) logé dans une enveloppe pour saucisse (1) fermée aux extrémités, où l'enveloppe pour saucisse (1) est munie d'un élément d'ouverture (4) dont l'actionnement permet l'ouverture volontaire de l'enveloppe pour saucisse (1) dans la région de l'élément d'ouverture (4), **caractérisée en ce que** l'élément d'ouverture (4) comporte un outil d'endommagement (13).

2. Saucisse suivant la revendication 1, **caractérisée en ce que** l'enveloppe pour saucisse (1) consiste en un matériau déchirable dans toutes les directions.

3. Saucisse suivant l'une quelconque des revendications qui précèdent, **caractérisée en ce que** l'élément d'ouverture (4) est agencé sur l'enveloppe pour saucisse (1) de manière qu'un actionnement provoque l'ouverture de l'enveloppe pour saucisse (1) substantiellement transversalement à un axe longitudinal (6) de la saucisse.

4. Saucisse suivant l'une quelconque des revendications qui précèdent, **caractérisée en ce que** l'élément d'ouverture (4) est placé à proximité d'une extrémité (2) de la saucisse.

5. Saucisse suivant l'une quelconque des revendications qui précèdent, **caractérisée en ce que** l'élément d'ouverture (4) est lié de manière fixe à l'enveloppe pour saucisse (1), en particulier par collage ou soudage.

6. Saucisse suivant l'une quelconque des revendications qui précèdent, **caractérisée en ce que** l'enveloppe pour saucisse (1) est pré-endommagée dans la région de l'élément d'ouverture (4).

7. Saucisse suivant la revendication 6, **caractérisée en ce que** le pré-endommagement (5) est formé par une perforation essentiellement en forme de pointe de flèche.

8. Saucisse suivant la revendication 6 ou 7, **caractérisée en ce que** le pré-endommagement est scellée par l'élément d'ouverture (4).

9. Saucisse suivant l'une quelconque des revendications qui précèdent, **caractérisée en ce que** l'élément d'ouverture (4) présente une zone de préhension libre (7) et une zone de déchirure (8) fixement solidaire de l'enveloppe pour saucisse (1).

10. Saucisse suivant la revendication 9, **caractérisée en ce que** le côté de la zone de déchirure (8) de l'élément de fermeture (4) qui est dirigé vers l'enveloppe pour saucisse (1) est revêtu d'adhésif.

11. Saucisse suivant la revendication 9 ou 10, **caractérisée en ce que** la liaison de la zone de déchirure (8) de l'élément d'ouverture (4) présente avec l'enveloppe pour saucisse (1) une forme favorisant un endommagement et une ouverture délibérés de l'enveloppe pour saucisse (1).

12. Saucisse suivant l'une quelconque des revendications 9 à 11, **caractérisée en ce que** la liaison de la zone de déchirure (8) de l'élément d'ouverture (4) avec l'enveloppe pour saucisse (1) est formée de manière à se terminer en pointe à la zone de préhension (7).

13. Saucisse suivant l'une quelconque des revendications 9 à 12, **caractérisée en ce que** la liaison de la zone de déchirure (8) de l'élément d'ouverture (4) avec l'enveloppe pour saucisse (1) est dimensionnée plus forte que la résistance à la déchirure de l'enveloppe pour saucisse (1).

14. Saucisse suivant la revendication 13, **caractérisée en ce que** l'outil d'endommagement (13) est placé sur le côté de l'élément d'ouverture (4) dirigé vers l'enveloppe pour saucisse (1).

15. Saucisse suivant la revendication 13 ou 14, **caractérisée en ce que** l'outil d'endommagement (13) est conformé au moins en partie à arête vive et / ou en pointe.

16. Saucisse suivant l'une quelconque des revendications 13 à 15, **caractérisée en ce que** l'outil d'endommagement (13) consiste en une partie en matière synthétique ou en tôle avec au moins un bord recourbé en direction de l'enveloppe de saucisse (1).

17. Saucisse suivant l'une quelconque des revendications 13 à 16, **caractérisée en ce que** l'élément d'ouverture (4) présente une zone (16) fixement solidaire de l'enveloppe pour saucisse (1), avec laquelle est liée de manière mobile une zone (17) comprenant l'outil d'endommagement (13) pour l'actionnement de l'outil d'endommagement (13).

18. Saucisse suivant la revendication 17, **caractérisée en ce que** la zone mobile (17) est protégée contre un actionnement imprévu.

19. Saucisse suivant l'une quelconque des revendications 17 ou 18, **caractérisée en ce que** la zone (16) de l'élément d'ouverture (4) fixement solidaire de l'enveloppe pour saucisse (1) est configurée en une pièce avec la zone mobile (17).

20. Saucisse comportant un contenu de saucisse (10) logée dans une enveloppe pour saucisse (1) fermée aux extrémités, où l'enveloppe pour saucisse (1) est munie d'un élément d'ouverture (4) dont l'actionnement permet l'ouverture volontaire de l'enveloppe pour saucisse (1) dans la région de l'élément d'ouverture (4) et où l'élément d'ouverture (4) présente une zone de préhension libre (7) et une zone de déchirure (8) fixement solidaire de l'enveloppe pour saucisse (1), **caractérisée en ce que** la zone de préhension (7) est liée de manière rigide à la zone de déchirure (8).

21. Saucisse suivant la revendication 20, **caractérisée en ce que** l'élément d'ouverture (4) est configuré en une pièce et essentiellement résistant au pliage.

22. Saucisse suivant la revendication 20 ou 21, **caractérisée en ce que** l'élément d'ouverture (4) présente une courbure essentiellement adjacente à la saucisse et adaptée à la forme de la saucisse.

23. Saucisse suivant l'une quelconque des revendications 20 à 22, **caractérisée en ce que** l'élément d'ouverture (4) est configuré avec bords émoussés ou en arrondi dans les zones entrant en contact avec l'enveloppe pour saucisse (1), en particulier pendant l'actionnement de l'élément d'ouverture (4).

24. Saucisse suivant l'une quelconque des revendications 20 à 23, **caractérisée en ce que** l'élément d'ouverture (4) est configuré de manière essentiellement rectangulaire avec bords arrondis.

25. Saucisse suivant l'une quelconque des revendications 20 à 24, **caractérisée par** les caractéristiques de l'une quelconque des revendications 1 à 19.

26. Enveloppe pour saucisse (1) comportant un élément d'ouverture suivant l'une quelconque des revendications 1 à 25 pour la préparation d'une saucisse.
